# EUROPÄISCHE PATENTSCHRIFT

(11) **EP 2 108 669 B1**
(45) Veröffentlichungstag und Bekanntmachung des Hinweises auf die Patenterteilung: **03.04.2013**
(21) Anmeldenummer: 08154390.2
(22) Anmeldetag: 11.04.2008
(51) Int. Cl.: C08G 18/48, C08G 18/50, C08L 71/02, C08K 5/10, C08L 75/10, C08L 75/00, C08G 18/10, C08G 18/12, C08G 18/36

(54) **Feuchtigkeitshärtende Dichtstoffzusammensetzung mit guter Lagerstabilität und geringer Oberflächenklebrigkeit**
Moisture-setting sealant compound with good storage stability and low surface adhesion
Composition de matériau d'étanchéité durcissant à l'humidité ayant une bonne stabilité de stockage et une adhérence de surface réduite

(43) Veröffentlichungstag der Anmeldung: 14.10.2009
(73) Patentinhaber: Sika Technology AG, 6340 Baar (CH)
(72) Erfinder: Onuoha, Ukiwo, 8303 Bassersdorf (CH)
(74) Vertreter: Sika Patent Attorneys

(56) Entgegenhaltungen:
- EP-A- 1 300 438
- EP-A- 1 329 469
- DE-A1- 3 718 102
- US-A1- 2005 277 734

## Beschreibung

### Technisches Gebiet

Die vorliegende Erfindung betrifft das Gebiet der feuchtigkeitshärtenden Zusammensetzungen sowie deren Verwendung als Dichtstoffe.

### Stand der Technik

In feuchtigkeitshärtenden Zusammensetzungen werden seit langem Weichmacher verwendet um die Applikationseigenschaften der Polymerzusammensetzung zu steuern. Diese Weichmacher weisen jedoch den grossen Nachteil auf, dass sie migrieren, das heisst, dass die Weichmacher nach der Aushärtung mit der Zeit an die Oberfläche wandern und dort zu Oberflächenklebrigkeit führen. Zudem sind die Weichmacher auch in der Lage, nicht umgesetzte Monomere, beziehungsweise niedermolekulare Oligomere, an die Oberfläche zu transportieren, was die Klebrigkeit noch weiter erhöht. Die Migration wird erfahrungsgemäss durch hohe Temperaturen noch verstärkt. An den klebrigen Oberflächen können sich leicht Schmutzpartikel oder kleine Insekten ansammeln, was bei ästhetisch anspruchvollen Anwendungen, wie zum Beispiel an einer sichtbaren Fassadenabdichtung, als Nachteil von derartigen Zusammensetzungen gewertet wird.
Weiterhin durch die Migration bedingt, verarmt somit die Zusammensetzung im Innern an Weichmacher, wodurch die Elastizität der ausgehärteten Zusammensetzungen mit der Zeit stark nachlässt, so dass die Zusammensetzungen verspröden. Eine Zusammensetzung mit derartig reduzierter Elastizität ist vielfach auch nicht mehr in der Lage, auftretende Kräfte zwischen zwei Substraten genügend formschlüssig zu übertragen, so dass die Haftung verloren geht. Zudem entstehen durch die Migration des Weichmachers im Innern der Zusammensetzung Hohlräume, was früher oder später zu Rissen führt. Somit führt die Migration des Weichmachers dazu, dass die für einen Dichtstoff wesentlichen Eigenschaften, nämlich die Abdichtung und die Haftung zum Substrat, verloren gehen.
Das Dokument US2005/0277734 A1 offenbart einkomponentige Polyurethan-Zusammensetzungen, die als Dichtungsmasse verwendet werden. Außerdem wird in der Tabelle 1 von der US2005/0277734 A1 eine Zusammensetzung beschrieben, die umfasst:
- 1 bis 8 Gew.% Methyl-Oleate,
- 40 bis 60 Gew.% Polyetherpolyol,
- 2 bis 6 Gew.-% Toluol-diisocyanat.
Der Einsatz von Methyl-Oleaten in dieser Polyurethan-Zusammensetzung hat keinen nachteiligen Einfluss auf die Lagerstabilität (siehe Absätze [0007], [0010] und [0048]).

### Darstellung der Erfindung

Aufgabe der vorliegenden Erfindung ist es daher, feuchtigkeitshärtende Polymerzusammensetzungen zur Verfügung zu stellen, welche eine reduzierte Weichmachermigration und somit eine verringerte Oberflächenklebrigkeit der ausgehärteten Zusammensetzung aufweisen.
Überraschenderweise wurde nun gefunden, dass eine Zusammensetzung gemäss Anspruch 1 dieses Problem lösen kann.
Derartige Zusammensetzungen weisen einerseits im ausgehärteten Zustand eine stark verringerte Oberflächenklebrigkeit auf. Es hat sich andererseits auch gezeigt, dass die mechanischen Eigenschaften auch über längere Zeiten der Umweltsexpositionen im Wesentlichen unverändert bleiben und dass die ausgehärteten Zusammensetzungen insbesondere nicht zur Versprödung neigen. Weiterhin zeichnen sich diese Zusammensetzung durch eine hervorragende Haftung auf unterschiedlichen Untergründen, insbesondere auf Beton, aus. Es hat sich schliesslich gezeigt, dass diese Vorteile auch nach länger andauernden Expositionen an UV- und/oder Temperatureinflüssen bestehen bleiben. Ausserdem verfügten derartige Zusammensetzungen überraschenderweise über eine hohe Lagerstabilität und eine kurze Hautbildungszeit.
Weitere Aspekte der vorliegenden Erfindung sind Gegenstand weiterer unabhängiger Ansprüche. Besonders bevorzugte Ausführungsformen sind Gegenstand der abhängigen Ansprüche.

### Wege zur Ausführung der Erfindung

Gegenstand der vorliegenden Erfindung sind Zusammensetzungen umfassend
a) mindestens ein Polymer **P** mit feuchtigkeitsreaktiven Gruppen, sowie
b) mindestens ein ungesättigtes natürliches ÖI;
   wobei das Polymer **P** entweder
   i) ein Polyurethanpolymer **P1** ist und die feuchtigkeitsreaktiven Gruppen Isocyanatgruppen sind und der Gehalt an Isocyanatgruppen 0.1 bis 1 Gewichts-%, insbesondere 0.1 bis 0.8 Gewichts-%, bevorzugt 0.3 bis 0.8 Gewichts-%, bezogen auf das Gesamtgewicht der Zusammensetzung, beträgt; oder
   ii) ein Polymer **P2** ist und die feuchtigkeitsreaktiven Gruppen Silangruppen sind und der Gehalt an Silangruppen 0.1 bis 2 Gewichts-%, insbesondere 0.1 bis 1.6 Gewichts-%, bevorzugt 0.6 bis 1.6 Gewichts-%, bezogen auf das Gesamtgewicht der Zusammensetzung, beträgt; oder
   iii)ein Polymer **P3** ist, welches als feuchtigkeitsreaktive Gruppen Isocyanatgruppen und Silangruppen aufweist und die Summe des Gehalts an Isocyanatgruppen und Silangruppen 0.1 bis 2 Gewichts-%, insbesondere 0.1 bis 1.6 Gewichts-%, bevorzugt 0.3 bis 1.6 Gewichts-%, bezogen auf das Gesamtgewicht der Zusammensetzung, beträgt;
      wobei der Gehalt der Isocyanatgruppen ≤ 1 Gewichts-%, insbesondere ≤ 0.8 Gewichts-%, bezogen auf das Gesamtgewicht der Zusammensetzung, beträgt.
      Es gilt hierbei die Massgabe, dass der Gesamtgehalt der feuchtigkeitsreaktiven Gruppen ≤ 2 Gewichts-%, insbesondere ≤ 1.6 Gewichts-%, bezogen auf das Gesamtgewicht der Zusammensetzung, beträgt, wobei der Gesamtgehalt aller Isocyanatgruppen ≤ 1 Gewichts-%, insbesondere ≤ 0.8 Gewichts-%, bezogen auf das Gesamtgewicht der Zusammensetzung, beträgt.

Mit "Poly" beginnende Substanznamen wie Polyol oder Polyisocyanat bezeichnen im vorliegenden Dokument Substanzen, die formal zwei oder mehr der in ihrem Namen vorkommenden funktionellen Gruppen pro Molekül enthalten.

Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst weiterhin auch so genannte Prepolymere, das heisst reaktive oligomere Voraddukte, deren funktionelle Gruppen am Aufbau von Makromolekülen beteiligt sind.

Der Begriff "Polyurethanpolymer" umfasst sämtliche Polymere, welche nach dem so genannten Diisocyanat-Polyadditions-Verfahren hergestellt werden. Dies schliesst auch solche Polymere ein, die nahezu oder gänzlich frei sind von Urethangruppen. Beispiele für Polyurethanpolymere sind Polyether-Polyurethane, Polyester-Polyurethane, Polyether-Polyharnstoffe, Polyharnstoffe, Polyester-Polyharnstoffe, Polyisocyanurate und Polycarbodiimide.

Unter dem "Molekulargewicht" versteht man im vorliegenden Dokument stets das Zahlenmittel des Molekulargewichts Mₙ.

Im vorliegenden Dokument bezeichnen die Terme "Silan", beziehungsweise "Organosilan", Verbindungen, welche einerseits mindestens eine, üblicherweise zwei oder drei, über Si-O-Bindungen, direkt an das Siliciumatom gebundene Alkoxygruppen oder Acyloxygruppen aufweisen, und andererseits mindestens einen, über eine Si-C-Bindung, direkt an das Siliciumatom gebundenen organischen Rest aufweisen. Derartige Silane sind dem Fachmann auch als Organoalkoxysilane bzw. Organoacyloxysilane bekannt.

Entsprechend beizeichnet der Begriff "Silangruppe" die an den, über die Si-C-Bindung gebundenen, organischen Rest des Silans gebundene siliciumhaltige Gruppe. Die Silane, beziehungsweise deren Silangruppen, haben die Eigenschaft, bei Kontakt mit Feuchtigkeit zu hydrolysieren. Dabei bilden sich Organosilanole, das heisst siliciumorganische Verbindungen enthaltend eine oder mehrere Silanolgruppen (Si-OH-Gruppen) und, durch nachfolgende Kondensationsreaktionen, Organosiloxane, das heisst siliciumorganische Verbindungen enthaltend eine oder mehrere Siloxangruppen (Si-O-Si-Gruppen).

Der Begriff "silanfunktionell" bezeichnet Verbindungen, die Silangruppen aufweisen. "Silanfunktionelle Polymere" sind demnach Polymere, welche mindestens eine Silangruppe aufweisen.

Als "Aminosilane", bzw. "Mercaptosilane", werden Organosilane bezeichnet, deren organischer Rest eine Aminogruppe, bzw. eine Mercaptogruppe, aufweist. Als "primäre Aminosilane" werden Aminosilane bezeichnet, welche eine primäre Aminogruppe aufweisen, also eine NH₂-Gruppe, die an einen organischen Rest gebunden ist. Als "sekundäre Aminosilane" werden Aminosilane bezeichnet, welche eine sekundäre Aminogruppe aufweisen, also eine NH-Gruppe, die an zwei organische Reste gebunden ist.

Als "ungesättigte natürliche Öle" werden in diesem Dokument bei 23°C flüssige Ester von Fettsäuren mit Glyceriden verstanden, wobei mindestens eine Fettsäure ungesättigt ist. Diese Ester sind in der Natur vorkommend. Sie können aber auch hergestellt wurden durch Synthese oder durch technische sowie biotechnologische Verfahren.

Der Begriff "Fettsäure" umfasst sämtliche Carbonsäuren, deren Carboxylgruppen mit gesättigten, ungesättigten, verzweigten oder unverzweigten Alkyl-Resten mit mehr als 9 C-Atomen verbunden sind. Sie können weitere Gruppen wie Ether-, Ester-, Halogen-, Amid-, Amino-, Urethan -, Hydroxy- oder Harnstoffgruppen enthalten.

Die Zusammensetzung enthält mindestens ein Polymer **P.** Das Polymer **P** kann ein Polyurethanpolymer **P1** oder ein Polymer **P2** oder ein Polymer **P3** sein. Weiterhin kann die Zusammensetzung auch mehrere Polyurethanpolymere P1 und/oder Polymere **P2** und/oder Polymere **P3** und/oder Mischungen von **P1, P2** und/oder **P3** enthalten.

Üblicherweise ist das Polymer **P** in einer Menge von 10 - 80 Gewichts-%, insbesondere von 15 - 50 Gewichts-%, bevorzugt von 15 - 30 Gewichts-%, bezogen auf das Gesamtgewicht der Zusammensetzung, vorhanden.

In einer Ausführungsform sind die feuchtigkeitsreaktiven Gruppen Isocyanatgruppen und das Polymer **P** ist ein Polyurethanpolymer **P1,** erhältlich durch die Umsetzung von mindestens einem Polyol mit mindestens einem Polyisocyanat.

Diese Umsetzung kann dadurch erfolgen, dass das Polyol und das Polyisocyanat mit üblichen Verfahren, beispielsweise bei Temperaturen von 50 °C bis 100 °C, gegebenenfalls unter Mitverwendung geeigneter Katalysatoren, zur Reaktion gebracht werden, wobei das Polyisocyanat so dosiert ist, dass dessen Isocyanatgruppen im Verhältnis zu den Hydroxylgruppen des Polyols im stöchiometrischen Überschuss vorhanden sind. Vorteilhaft ist das Polyisocyanat so dosiert, dass ein NCO/OH-Verhältnis von ≤ 2.5, bevorzugt ≤ 2.2, eingehalten wird. Unter dem NCO/OH-Verhältnis wird hierbei das Verhältnis der Anzahl der eingesetzten Isocyanatgruppen zu der Anzahl der eingesetzten Hydroxylgruppen verstanden. Bevorzugt verbleibt nach der Umsetzung der Hydroxylgruppen des Polyols ein Gehalt an Isocyanatgruppen von 0.8 bis 2.2 Gewichts-%, bezogen auf das Gesamtgewicht des Polyurethanpolymers **P1.**

Als Polyisocyanate für die Herstellung des Polyurethanpolymers **P1** können die folgenden handelsüblichen Polyisocyanate oder Mischungen davon verwendet werden:
1,6-Hexamethylendiisocyanat (HDI), 2-Methylpentamethylen-1,5-diisocyanat, 2,2,4- und 2,4,4-Trimethyl-1,6-hexamethylendiisocyanat (TMDI), 1,12-Dodecamethylendiisocyanat, Lysin- und Lysinesterdiisocyanat, Cyclohexan-1,3- und Cyclohexan-1,4-diisocyanat und beliebige Gemische dieser Isomeren, 1-Isocyanato-3,3,5-trimethyl-5-isocyanatomethyl-cyclohexan (=Isophorondiisocyanat oder IPDI), Perhydro-2,4'- und Perhydro-4,4'-diphenylmethandiisocyanat (HMDI), 1,4-Diisocyanato-2,2,6-trimethylcyclohexan (TMCDI), 1,3- und 1,4-Bis-(isocyanatomethyl)-cyclohexan, m- und p-Xylylendiisocyanat (m- und p-XDI), m- und p-Tetramethyl-1,3- und p-Tetramethyl-1,4-xylylendiisocyanat (mund p-TMXDI), Bis-(1-Isocyanato-1-methylethyl)-naphthalin, 2,4- und 2,6-Toluylendiisocyanat und beliebige Gemische dieser Isomeren (TDI), 4,4'-, 2,4'-und 2,2'-Diphenylmethandiisocyanat und beliebige Gemische dieser Isomeren (MDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), Oligomere und Polymere der vorgenannten Isocyanate, sowie beliebige Mischungen der vorgenannten Isocyanate. Bevorzugt sind MDI, TDI, HDI und IPDI.

Geeignete Polyole für die Herstellung des Polyurethanpolymers **P1** sind insbesondere Polyetherpolyole, Polyesterpolyole und Polycarbonatpolyole sowie Mischungen dieser Polyole.

Als Polyetherpolyole, auch Polyoxyalkylenpolyole oder Oligoetherole genannt, sind insbesondere jene geeignet, welche Polymerisationsprodukte von Ethylenoxid, 1,2-Propylenoxid, 1,2- oder 2,3-Butylenoxid, Oxetan, Tetrahydrofuran oder Mischungen davon sind, gegebenenfalls polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin, sowie Mischungen der genannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliäquivalent Ungesättigtheit pro Gramm Polyol (mEq/g)), hergestellt beispielsweise mit Hilfe von so genannten Double Metal Cyanide Komplex-Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH, CsOH oder Alkalialkoholaten.
Besonders geeignet sind Polyoxyethylenpolyole und Polyoxypropylenpolyole, insbesondere Polyoxyethylendiole, Polyoxypropylendiole, Polyoxyethylentriole und Polyoxypropylentriole.

Insbesondere geeignet sind Polyoxyalkylendiole oder Polyoxyalkylentriole mit einem Ungesättigtheitsgrad tiefer als 0.02 mEq/g und mit einem Molekulargewicht im Bereich von 1'000 bis 30'000 g/mol, sowie Polyoxyethylendiole, Polyoxyethylentriole, Polyoxypropylendiole und Polyoxypropylentriole mit einem Molekulargewicht von 400 bis 20'000 g/mol.
Ebenfalls besonders geeignet sind so genannte Ethylenoxidterminierte ("EO-endcapped", ethylene oxide-endcapped) Polyoxypropylenpolyole. Letztere sind spezielle Polyoxypropylenpolyoxyethylenpolyole, die beispielsweise dadurch erhalten werden, dass reine Polyoxypropylenpolyole, insbesondere Polyoxypropylendiole und -triole, nach Abschluss der Polypropoxylierungsreaktion mit Ethylenoxid weiter alkoxyliert werden und dadurch primäre Hydroxylgruppen aufweisen. Bevorzugt sind in diesem Fall Polyoxypropylenpolyoxyethylendiole und Polyoxypropylenpolyoxyethylentriole.
Weiterhin geeignet sind Styrol-Acrylnitril gepfropfte Polyetherpolyole, wie sie beispielsweise unter dem Handelsnamen Lupranol® kommerziell erhältlich sind von der Firma Elastogran GmbH, Deutschland.

Als Polyesterpolyole sind insbesondere Polyester geeignet, welche mindestens zwei Hydroxylgruppen tragen und nach bekannten Verfahren, insbesondere der Polykondensation von Hydroxycarbonsäuren oder der Polykondensation von aliphatischen und/oder aromatischen Polycarbonsäuren mit zwei- oder mehrwertigen Alkoholen, hergestellt werden.
Insbesondere geeignet sind Polyesterpolyole, welche hergestellt sind aus zwei- bis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole mit organischen Dicarbonsäuren oder deren Anhydriden oder Estern wie beispielsweise Bernsteinsäure, Glutarsäure, Adipinsäure, Trimethyladipinsäure, Korksäure, Azelainsäure, Sebacinsäure, Dodecandicarbonsäure, Maleinsäure, Fumarsäure, Dimerfettsäure, Phthalsäure, Phthalsäureanhydrid, Isophthalsäure, Terephthalsäure, Dimethylterephthalat, Hexahydrophthalsäure, Trimellithsäure und Trimellithsäureanhydrid oder Mischungen der vorgenannten Säuren, sowie Polyesterpolyole aus Lactonen wie beispielsweise ε -Caprolacton.
Besonders geeignet sind Polyesterdiole, insbesondere solche, die hergestellt sind aus Adipinsäure, Azelainsäure, Sebacinsäure, Dodecandicarbonsäure, Dimerfettsäure, Phthalsäure, Isophthalsäure und Terephthalsäure als Dicarbonsäure oder aus Lactonen wie beispielsweise ε-Caprolacton und aus Ethylenglykol, Diethylenglykol, Neopentylglykol, 1,4-Butandiol, 1,6-Hexandiol, Dimerfettsäurediol und 1,4-Cyclohexandimethanol als zweiwertigem Alkohol.

Als Polycarbonatpolyole sind insbesondere jene geeignet, wie sie durch Umsetzung beispielsweise der oben genannten, zum Aufbau der Polyesterpolyole eingesetzten, Alkohole mit Dialkylcarbonaten wie Dimethylcarbonat, Diarylcarbonaten wie Diphenylcarbonat oder Phosgen zugänglich sind. Besonders geeignet sind Polycarbonatdiole, insbesondere amorphe Polycarbonatdiole.

Weitere geeignete Polyole sind Poly(meth)acrylatpolyole.

Ebenfalls geeignet sind weiterhin Polykohlenwasserstoffpolyole, auch Oligohydrocarbonole genannt, beispielsweise polyhydroxyfunktionelle Ethylen-Propylen-, Ethylen-Butylen- oder Ethylen-Propylen-Dien-Copolymere, wie sie beispielsweise von der Firma Kraton Polymers, USA, hergestellt werden, oder polyhydroxyfunktionelle Copolymere aus Dienen wie 1,3-Butandien oder Diengemischen und Vinylmonomeren wie Styrol, Acrylnitril oder Isobutylen, oder polyhydroxyfunktionelle Polybutadienpolyole, beispielsweise solche, die durch Copolymerisation von 1,3-Butadien und Allylalkohol oder durch Oxidation von Polybutadien hergestellt werden, sowie deren Hydrierungsprodukte.
Weiterhin geeignet sind polyhydroxyfunktionelle Acrylnitril/Butadien-Copolymere, wie sie beispielsweise aus Epoxiden oder Aminoalkoholen und carboxylterminierten Acrylnitril/Butadien-Copolymeren, welche kommerziell erhältlich sind unter dem Namen Hypro® (früher Hycar®) CTBN von der Firma Emerald Performance Materials, LLC, USA, hergestellt werden können.

Diese genannten Polyole weisen bevorzugt ein mittleres Molekulargewicht von 250 bis 30'000 g/mol, insbesondere von 1'000 bis 30'000 g/mol, und eine mittlere OH-Funktionalität im Bereich von 1.6 bis 3 auf.

Besonders geeignete Polyole sind Polyesterpolyole und Polyetherpolyole, insbesondere Polyoxyethylenpolyol, Polyoxypropylenpolyol und Polyoxypropylenpolyoxyethylenpolyol, bevorzugt Polyoxyethylendiol, Polyoxypropylendiol, Polyoxyethylentriol, Polyoxypropylentriol, Polyoxypropylenpolyoxyethylendiol und Polyoxypropylenpolyoxyethylentriol.

Zusätzlich zu diesen genannten Polyolen können kleine Mengen von niedrigmolekularen zwei- oder mehrwertigen Alkoholen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, hydriertes Bisphenol A, dimere Fettalkohole, 1,1,1-Trimethylolethan, 1,1,1-Trimethylolpropan, Glycerin, Pentaerythrit, Zuckeralkohole wie Xylit, Sorbit oder Mannit, Zucker wie Saccharose, andere höherwertige Alkohole, niedrigmolekulare Alkoxylierungsprodukte der vorgenannten zwei- und mehrwertigen Alkohole, sowie Mischungen der vorgenannten Alkohole bei der Herstellung des Isocyanatgruppen aufweisenden Polyurethanpolymers **P1** mitverwendet werden.

In einer weiteren Ausführungsform ist das Polymer **P** ein Polymer **P2** und die feuchtigkeitsreaktiven Gruppen sind Silangruppen.
Polymer **P2** ist ein silanfunktionelles Polymer. Es lässt sich grundsätzlich auf unterschiedliche Arten herstellen:
α) durch die Umsetzung eines Silans, welches mindestens eine gegenüber Isocyanatgruppen reaktive Gruppe aufweist, mit einem Polyurethanpolymer, welches Isocyanatgruppen aufweist.
β) durch die Umsetzung eines Isocyanatosilans IS mit einem Polymer, welches gegenüber Isocyanatgruppen reaktive funktionelle Gruppen aufweist.
y) durch eine Hydrosilylierungsreaktion von Polymeren mit endständigen Doppelbindungen.

In einer ersten Variante (α) ist das silanfunktionelle Polymer **P2** erhältlich durch die Umsetzung eines Silans, welches mindestens eine gegenüber Isocyanatgruppen reaktive Gruppe aufweist, mit einem Polyurethanpolymer, welches Isocyanatgruppen aufweist. Diese Umsetzung wird bevorzugt mit einem stöchiometrischen Verhältnis der gegenüber Isocyanatgruppen reaktiven Gruppen zu Isocyanatgruppen von 1:1 oder mit einem leichten Überschuss an gegenüber Isocyanatgruppen reaktiven Gruppen durchgeführt, so dass das resultierende silanfunktionelle Polymer **P2** frei von Isocyanatgruppen ist.
Das Silan, welches mindestens eine gegenüber Isocyanatgruppen reaktive Gruppe aufweist, ist beispielsweise ein Mercaptosilan oder ein Aminosilan, insbesondere ein Aminosilan.
Bevorzugt ist das Aminosilan ein Aminosilan **AS** der Formel (I).

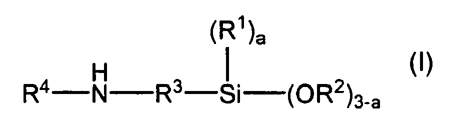

Dabei steht der Rest R¹ für eine Alkylgruppe mit 1 bis 8 C-Atomen, insbesondere für eine Methyl- oder für eine Ethylgruppe.
Der Rest R² steht für eine Acyl- oder Alkylgruppe mit 1 bis 5 C-Atomen, insbesondere für eine Methyl-, für eine Ethyl- oder für eine Isopropylgruppe.
Der Rest R³ steht für eine lineare oder verzweigte, gegebenenfalls cyclische, Alkylengruppe mit 2 bis 12 C-Atomen, gegebenenfalls mit aromatischen Anteilen, und gegebenenfalls mit einem oder mehreren Heteroatomen, insbesondere mit einem oder mehreren Stickstoffatomen.
Der Index a steht für einen Wert von 0 oder 1 oder 2, insbesondere für einen Wert von 0.

R⁴ steht für ein Wasserstoffatom oder für einen linearen oder verzweigten Kohlenwasserstoffrest mit 1 bis 20 C-Atomen, welcher gegebenenfalls cyclische Anteile aufweist, oder für einen Rest der Formel (II).

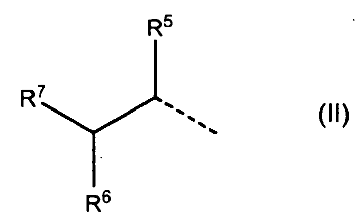

Dabei stehen die Reste R⁵ und R⁶, unabhängig voneinander, für ein Wasserstoffatom oder für einen Rest aus der Gruppe umfassend -R⁸, -CN und -COOR⁸.
Der Rest R⁷ steht für ein Wasserstoffatom oder für einen Rest aus der Gruppe umfassend -CH₂-COOR⁸, -COOR⁸, -CONHR⁸, -CON(R⁸)₂, -CN, -NO₂, -PO(OR⁸)₂, -SO₂R⁸ und -SO₂OR⁸.
Der Rest R⁸ steht für einen, gegebenenfalls mindestens ein Heteroatom enthaltenden, Kohlenwasserstoffrest mit 1 bis 20 C-Atomen.

Beispiele für geeignete Aminosilane **AS** sind primäre Aminosilane wie 3-Aminopropyltrimethoxysilan, 3-Aminopropyldimethoxymethylsilan; sekundäre Aminosilane wie N-Butyl-3-aminopropyltrimethoxysilan, N-Phenyl-3-aminopropyltrimethoxysilan; die Produkte aus der Michael-artigen Addition von primären Aminosilanen wie 3-Aminopropyltrimethoxysilan oder 3-Aminopropyldimethoxymethylsilan an Michael-Akzeptoren wie Acrylnitril, Acryl- und Methacrylsäureestern, Acryl- oder Methacrylsäureamiden, Maleinsäure- und Fumarsäurediestern, Citraconsäurediestern und Itaconsäurediestern, beispielsweise N-(3-Trimethoxysilyl-propyl)-amino-bernsteinsäuredimethyl- und -diethylester; sowie Analoga der genannten Aminosilane mit Ethoxy- oder Isopropoxygruppen anstelle der Methoxygruppen am Silicium. Als Aminosilane **AS** besonders geeignet sind sekundäre Aminosilane, insbesondere Aminosilane **AS,** bei denen R⁴ in Formel (I) verschieden von H ist. Bevorzugt sind die Michael-artigen Addukte, insbesondere N-(3-Trimethoxysilyl-propyl)-amino-bernstein-säurediethylester.

Der Begriff "Michael-Akzeptor" bezeichnet im vorliegenden Dokument Verbindungen, welche aufgrund der in ihnen enthaltenen, durch Elektronenakzeptor-Reste aktivierten Doppelbindungen befähigt sind, mit primären Aminogruppen (NH₂-Gruppen) in einer der Michael-Addition analogen Weise nucleophile Additionsreaktionen einzugehen (Hetero-Michael-Addition).

Als Isocyanatgruppen aufweisendes Polyurethanpolymer zur Herstellung eines silanfunktionellen Polymers **P2** eignen sich beispielsweise Polyurethanpolymere, wie sie vorhergehend als Polyurethanpolymere **P1** beschrieben worden sind.

In einer zweiten Variante (β) erhält man ein silanfunktionelles Polymer **P2** durch die Umsetzung eines Isocyanatosilans IS mit einem Polymer, welches gegenüber Isocyanatgruppen reaktive funktionelle Gruppen, insbesondere Hydroxylgruppen, Mercaptogruppen und/oder Aminogruppen, aufweist. Diese Umsetzung erfolgt typischerweise stöchiometrisch, das heisst in einem Verhältnis der Isocyanatgruppen zu den gegenüber Isocyanatgruppen reaktiven funktionellen Gruppen von 1:1, beispielsweise bei Temperaturen von 20 °C bis 100 °C, gegebenenfalls unter Mitverwendung von Katalysatoren.
Als Isocyanatosilan IS geeignet sind Verbindungen der Formel (III). 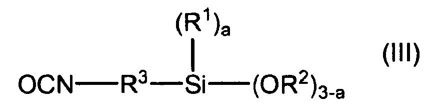 R¹, R², R³ und a wurden bereits vorgängig beschrieben.

Beispiele für geeignete Isocyanatosilane IS der Formel (III) sind Isocyanatomethyltrimethoxysilan, Isocyanatomethyldimethoxymethylsilan 3-Isocyanatopropyltrimethoxysilan, 3-Isocyanatopropyldimethoxymethylsilan, und deren Analoga mit Ethoxy- oder Isopropoxygruppen anstelle der Methoxygruppen am Silicium.

Bevorzugt weist das Polymer als gegenüber Isocyanatgruppen reaktive funktionelle Gruppen Hydroxylgruppen auf.

Als Hydroxylgruppen aufweisende Polymere eignen sich einerseits die bereits für die Herstellung des Polyurethanpolymers P1 genannten Polyole, insbesondere hochmolekulare Polyoxyalkylenpolyole, bevorzugt Polyoxypropylendiole mit einem Ungesättigtheitsgrad tiefer als 0.02 mEq/g und mit einem Molekulargewicht im Bereich von 4'000 bis 30'000 g/mol, insbesondere solche mit einem Molekulargewicht im Bereich von 8'000 bis 30'000 g/mol.
Andererseits eignen sich auch Hydroxylgruppen aufweisende, Polyurethanpolymere zur Umsetzung mit Isocyanatosilanen IS der Formel (III). Solche Polyurethanpolymere sind erhältlich durch die Umsetzung von mindestens einem Polyisocyanat mit mindestens einem Polyol. Diese Umsetzung kann dadurch erfolgen, dass das Polyol und das Polyisocyanat mit üblichen Verfahren, beispielsweise bei Temperaturen von 50 °C bis 100 °C, gegebenenfalls unter Mitverwendung geeigneter Katalysatoren, zur Reaktion gebracht werden, wobei das Polyol so dosiert ist, dass dessen Hydroxylgruppen im Verhältnis zu den Isocyanatgruppen des Polyisocyanates im stöchiometrischen Überschuss vorhanden sind. Bevorzugt ist ein Verhältnis von Hydroxylgruppen zu Isocyanatgruppen von 1.3:1 bis 4:1, insbesondere von 1.8:1 bis 2.1:1. Für diese Umsetzung geeignet sind dieselben Polyole und Polyisocyanate, die bereits als geeignet zur Herstellung eines Isocyanatgruppen aufweisenden Polyurethanpolymers **P1** erwähnt wurden.
Beispielsweise sind derartige silanfunktionelle Polymere kommerziell erhältlich unter den Handelsnamen SPUR+® 1010LM, 1015LM und 1050MM von der Firma Momentive Performance Materials Inc., USA, sowie unter den Handelsnamen Geniosil® STP-E15 und Geniosil® STP-E35 von der Firma Wacker Chemie AG, Deutschland.

In einer dritten Variante (γ) erhält man ein silanfunktionelles Polymer **P2** durch eine Hydrosilylierungsreaktion von Polymeren mit endständigen Doppelbindungen, beispielsweise Poly(meth)acrylatpolymere oder Polyetherpolymere, insbesondere von allylterminierten Polyoxyalkylenpolymeren, beschrieben beispielsweise in US 3,971,751 und US 6,207,766, deren Offenbarung insbesondere hiermit durch Bezugnahme eingeschlossen wird.

Beispielsweise sind derartige silanfunktionelle Polymere kommerziell erhältlich unter den Handelsnamen MS-Polymer® S203(H), S303(H), S227, S810, MA903 und S943, Silyl® SAX220, SAX350, SAX400 und SAX725, Silyl® SAT350 und SAT400, sowie XMAP® SA100S und SA310S von der Firma Kaneka Corp., Japan, oder unter dem Handelsnamen Polymer ST50 von der Firma Hanse Chemie AG, Deutschland, sowie unter den Handelsnamen Excestar® S2410, S2420, S3430, S3630, W2450 und MSX931 von der Firma Asahi Glass Co, Ltd., Japan.

In einer weiteren Ausführungsform ist das Polymer **P** ein Polymer **P3,** welches als feuchtigkeitsreaktive Gruppen Isocyanatgruppen und Silangruppen aufweist. Somit weisen Polymere **P3** im selben Molekül sowohl Isocyanatgruppen als auch Silangruppen auf.
Ein Polymer **P3** wird vorzugsweise hergestellt durch eine Umsetzung von einem Polyurethanpolymer **P1,** wie es vorhergehend beschrieben wurde, mit einem Silan, welches mindestens eine gegenüber Isocyanatgruppen reaktive Gruppe aufweist. Für diese Umsetzung geeignete Silane sind in der ersten Variante (α) zur Herstellung eines silanfunktionellen Polymer **P2** beschrieben worden. Hierbei werden die Isocyanatgruppen des Polyurethanpolymers **P1** im Bezug auf die gegenüber Isocyanatgruppen reaktiven funktionellen Gruppen des Silans in stöchiometrischem Überschuss eingesetzt.

Die Zusammensetzung umfasst mindestens ein ungesättigtes natürliches ÖI.
Als am Aufbau der ungesättigten natürlichen Öle beteiligten Fettsäuren eignen sich insbesondere Carbonsäuren, deren Carboxylgruppen mit Alkyl-Resten mit mehr als 11 C-Atomen, insbesondere mit mehr als 13 C-Atomen verbunden sind. Weiter bevorzugt sind aliphatische Carbonsäuren mit unverzweigter Kohlenstoffkette.
Geeignete Fettsäuren sind beispielsweise Laurin-, Myristin-, Palmitin-, Stearin-, Isostearin-, Isopalmitin-, Arachin-, Behen-, Cerotin- und Melissinsäuren, sowie einfach oder mehrfach ungesättigten Fettsäuren, insbesondere Palmitolein-, ÖI-, Elaidin-, Petroselin-, Eurca-, Linol-, Linolen-, Elaeostearin-, Arachidon-, Clupanodon-, Docosahexaen- und Gadoleinsäuren. Natürlich sind auch Gemische verschiedener Fettsäuren bei der Veresterung mit Glyceriden möglich und können vorteilhaft sein.
Bevorzugte Glyceride, der den ungesättigten natürlichen Ölen zugrunde liegenden Estern von Fettsäuren mit Glyceriden, sind Diglyceride und Triglyceride. Natürlich sind auch Gemische verschiedener Glyceride bei der Veresterung mit Fettsäuren möglich und können vorteilhaft sein.
Bevorzugte ungesättigte natürliche Öle sind pflanzliche Öle, welche aus Ölpflanzen gewonnen werden und ungesättigte Fettsäuren enthalten und/oder tierische Öle, die ungesättigte Fettsäuren enthalten.
Insbesondere sind ungesättigte natürliche Öle ausgewählt aus der Gruppe bestehend aus Rizinusöl, Leinöl, Hanföl, Chiaöl, Sojaöl, Rapsöl, Maiskeimöl, Sonnenblumenöl, Mohnöl, Walnussöl, Rübsaatöl, Baumwollsaatöl, Perillaöl, Oiticicaöl, Safloröl, Holzöl, Fischöl, Erdnussöl, Sesamöl, Mandelöl und Olivenöl. Meist bevorzugte ungesättigte natürliche Öle sind Sojaöl und Rapsöl.

Die lod-Zahl (IZ) ist eine Masszahl für den Grad der Ungesättigtheit einer Verbindung und bestimmt sich nach dem Verfahren nach Wijs gemäss DIN 53241. Typischerweise weist die lodzahl des ungesättigten natürlichen Öls einen Wert von ≥ 100, insbesondere ≥ 140, bevorzugt ≥ 170 auf.
Typischerweise beträgt der Anteil an ungesättigtem natürlichen Öl 0.1 bis 15 Gewichts-%, insbesondere 1 bis 13 Gewichts-%, bevorzugt 3 bis 8 Gewichts-%, besonders bevorzugt 6 bis 8 Gewichts-%, bezogen auf das Gesamtgewicht der Zusammensetzung.
Das ungesättigte natürliche Öl kann Spuren von Wasser enthalten. Insbesondere ist der Wasseranteil im ungesättigten natürlichen Öl kleiner als 0.5 Gewichts-%, vorzugsweise kleiner als 0.2 Gewichts-%. Meist bevorzugt enthält das ungesättigte natürliche ÖI kein Wasser.

Vorzugsweise weist die Zusammensetzung weiterhin mindestens einen Füllstoff auf, wobei der Anteil an Füllstoff 20 bis 60 Gewichts-%, insbesondere 30 bis 60 Gewichts-%, bezogen auf das Gesamtgewicht der Zusammensetzung, beträgt. Es ist durchaus möglich und kann sogar von Vorteil sein, eine Mischung verschiedener Füllstoffe einzusetzen.
Der Füllstoff beeinflusst sowohl die rheologischen Eigenschaften der nicht ausgehärteten Zusammensetzung als auch die mechanischen Eigenschaften der ausgehärteten Zusammensetzung. Geeignete Füllstoffe sind anorganische und organische Füllstoffe, zum Beispiel natürliche, gemahlene oder gefällte Calciumcarbonate, welche gegebenenfalls mit Fettsäuren, insbesondere Stearaten, beschichtet sind, Bariumsulfat (BaSO₄, auch Baryt oder Schwerspat genannt), calcinierte Kaoline, Aluminiumoxide, Aluminiumhydroxide, Kieselsäuren, insbesondere hochdisperse Kieselsäuren aus Pyrolyseprozessen, Russe, insbesondere industriell hergestellter Russ (Carbon Black; im Folgenden als "Russ" bezeichnet), PVC-Pulver oder Hohlkugeln. Bevorzugte Füllstoffe sind Calciumcarbonate, calcinierte Kaoline, Russ, hochdisperse Kieselsäuren sowie flammhemmende Füllstoffe, wie Hydroxide oder Hydrate, insbesondere Hydroxide oder Hydrate von Aluminium, bevorzugt Aluminiumhydroxid.

Grundsätzlich ist es nicht nötig, in der beschriebenen Zusammensetzung Weichmacher einzusetzen. Werden dennoch Weichmacher eingesetzt, sind dies insbesondere Ester organischer Carbonsäuren oder deren Anhydride, wie Phthalate, beispielsweise Dioctylphthalat, Diisononylphthalat oder Diisodecylphthalat, Adipate, beispielsweise Dioctyladipat, Azelate und Sebacate, Polyole, beispielsweise Polyoxyalkylenpolyole oder Polyesterpolyole, organische Phosphor- und Sulfonsäureester oder Polybutene.
Es wird jedoch bevorzugt, dass in der Zusammensetzung der Anteil von Weichmacher kleiner ist als der Anteil von ungesättigten natürlichen Ölen. Bevorzugt ist die Zusammensetzung frei von Weichmachern, insbesondere frei von den oben genannten Weichmachern.

Die Zusammensetzung kann weiterhin latente Härter enthalten. Latente Härter sind Substanzen, welche durch Einfluss von Wärme oder Wasser vernetzende Substanzen freisetzen. Besonders bevorzugt als latente Härter sind Polyaldimine, die beim Kontakt mit Wasser Polyamine freisetzen, welche schnell mit Isocyanatgruppen in der Zusammensetzung reagieren und dadurch zur Vernetzung führen. Polyaldimine werden aus Aldehyden und Polyaminen nach dem Fachmann bekannter Art und Weise hergestellt. Bevorzugt sind Polyaldimine, die keine Wasserstoffatome als Substituenten in α-Stellung zum C-Atom der Aldiminogruppe enthalten, und deshalb die Aldiminogruppen nicht zu Enaminogruppen tautomerisieren können. Meist bevorzugt sind Polyaldimine, sowie die bei der Hydrolyse entstehenden Aldehyde, schwach-oder nicht-riechend. Derartige Zusammensetzungen sind für Anwendungen in geschlossenen oder schlecht belüften oder schlecht belüftbaren Räumen vorteilhaft. Meist bevorzugt sind Polyaldimine, wie sie in den Patentschriften US 2005/0065276 A1, US 2006/149025 A1 sowie WO 2007/036572 A1 offenbart sind und deren Inhalt insbesondere hiermit durch Bezugnahme eingeschlossen wird.

Zusätzlich kann die Zusammensetzung noch weitere Bestandteile enthalten. Beispielsweise sind derartige Bestandteile Lösungsmittel; Fasern, beispielsweise aus Polyethylen; Farbstoffe; Pigmente; Katalysatoren, beispielsweise Metallkatalysatoren in Form von Organozinnverbindungen wie Dibutylzinndilaurat und Dibutylzinndiacetylacetonat, Bismut-organische Verbindungen oder Bismut-Komplexe, Titankatalysatoren, aminogruppenhaltige Verbindungen, beispielsweise 1,4-Diazabicyclo[2.2.2]octan und 2,2'-Dimorpholinodiethylether, Aminosilane sowie Mischungen der genannten Katalysatoren; Rheologie-Modifizierer wie Verdickungsmittel oder Thixotropierungsmittel, beispielsweise Harnstoffverbindungen der Art, wie sie als Thixotropierungsmittel ("Thixotropy endowning agent") in US 2004/0010076 A1 in den Abschnitten [0046] bis [0057] beschrieben sind und deren Inhalt insbesondere hiermit durch Bezugnahme eingeschlossen wird, Polyamidwachse, Bentonite oder pyrogene Kieselsäuren; Haftvermittler, beispielsweise Epoxysilane, (Meth)acrylsilane, Anhydridosilane oder Addukte der vorgenannten Silane mit primären Aminosilanen, sowie Harnstoffsilane, Vernetzer, beispielsweise silanfunktionelle Oligo- und Polymere, geringe Mengen, insbesondere weniger als 1 Gewichts-%, bezogen auf das Gesamtgewicht der Zusammensetzung, von Polyisocyanaten, wie sie zur Herstellung von Polyurethanpolymer P1 vorhergehend beschrieben wurden, beispielsweise IPDI; Trocknungsmittel, zum Beispiel Vinyltrimethoxysilan, α funktionelle Silane wie N-(Silylmethyl)-O-methyl-carbamate, insbesondere N-(Methyldimethoxysilylmethyl)-O-methyl-carbamat, (Methacryloxymethyl)silane, Methoxymethylsilane, N-Phenyl-, N-Cyclohexyl- und N-Alkylsilane, Orthoameisensäureester, Calciumoxid oder Molekularsiebe; Stabilisatoren, beispielsweise gegen Wärme, Licht- und UV-Strahlung; flammhemmende Substanzen; oberflächenaktive Substanzen wie Netzmittel, Verlaufsmittel, Enlüftungsmittel oder Entschäumer; Biozide wie Algizide, Fungizide oder das Pilzwachstum hemmende Substanzen; sowie weitere üblicherweise in feuchtigkeitshärtenden Zusammensetzungen eingesetzte Substanzen.

Es ist vorteilhaft, alle genannten, in der Zusammensetzung gegebenenfalls vorhandenen Bestandteile, insbesondere Füllstoff und Katalysator, so auszuwählen, dass die Lagerstabilität der Zusammensetzung durch die Anwesenheit eines solchen Bestandteils nicht negativ beeinflusst wird, das heisst, dass sich die Zusammensetzung in ihren Eigenschaften, insbesondere den Applikations- und Aushärtungseigenschaften, bei der Lagerung nicht oder nur wenig verändert. Dies bedingt, dass zur chemischen Aushärtung der beschriebenen Zusammensetzung führende Reaktionen, insbesondere der feuchtigkeitsreaktiven Gruppen, während der Lagerung nicht in signifikantem Ausmass auftreten. Es ist deshalb insbesondere von Vorteil, dass die genannten Bestandteile kein oder höchstens Spuren von Wasser enthalten oder beim Lagern freisetzen. Es kann deshalb sinnvoll sein, gewisse Bestandteile vor dem Einmischen in die Zusammensetzung chemisch oder physikalisch zu trocknen.

Die vorhergehend beschriebene Zusammensetzung wird vorzugsweise unter Ausschluss von Feuchtigkeit hergestellt und aufbewahrt. Die Zusammensetzung ist insbesondere lagerstabil, das heisst, sie kann unter Ausschluss von Feuchtigkeit in einer geeigneten Verpackung oder Anordnung, wie beispielsweise einem Fass, einem Beutel oder einer Kartusche, über einen Zeitraum von mehreren Monaten bis zu einem Jahr und länger aufbewahrt werden, ohne dass sie sich in ihren Anwendungseigenschaften oder in ihren Eigenschaften nach der Aushärtung in einem für ihren Gebrauch relevanten Ausmass verändert. Üblicherweise wird die Lagerstabilität über die Veränderung der Viskosität im Verlauf der Lagerung bestimmt.

Die Isocyanatgruppen der Zusammensetzung haben die Eigenschaft, direkt mit Feuchtigkeit zu reagieren und bilden unter Abspaltung von Kohlendioxid Harnstoffgruppen. Als Ergebnis dieser und allfälliger weiterer Reaktionen der Isocyanatgruppen härtet die Zusammensetzung aus. Diese Reaktionen können auch durch den Einsatz von Katalysatoren beschleunigt werden.
Die Silangruppen der Zusammensetzung haben die Eigenschaft, bei Kontakt mit Feuchtigkeit zu hydrolysieren. Dabei bilden sich Organosilanole und, durch nachfolgende Kondensationsreaktionen, Organosiloxane. Als Ergebnis dieser Reaktionen, welche durch den Einsatz von Katalysatoren beschleunigt werden können, härtet die Zusammensetzung schliesslich aus.

Das für die Aushärtung der vorgängig beschriebenen Zusammensetzung benötigte Wasser kann entweder aus der Luft stammen (Luftfeuchtigkeit), oder aber die vorgängig beschriebene Zusammensetzung kann mit einer Wasser enthaltenden Komponente in Kontakt gebracht werden, zum Beispiel durch Bestreichen, beispielsweise mit einem Abglättmittel, oder durch Besprühen, oder es kann der Zusammensetzung bei der Applikation eine Wasser enthaltende Komponente zugesetzt werden, zum Beispiel in Form einer wasserhaltigen Paste, die, beispielsweise über einen Statikmischer, eingemischt wird. Bei der Aushärtung mittels Luftfeuchtigkeit härtet die Zusammensetzung von aussen nach innen durch. Die Geschwindigkeit der Aushärtung wird dabei von verschiedenen Faktoren, wie beispielsweise der Diffusionsrate des Wassers, der Temperatur, der Umgebungsfeuchte und der Klebegeometrie, bestimmt. Sie verlangsamt sich in der Regel mit dem Fortschreiten der Aushärtung.

Somit betrifft ein weiterer Gegenstand der vorliegenden Erfindung eine ausgehärtete Zusammensetzung, welche erhalten wird durch die Reaktion der vorgängig beschriebenen Zusammensetzung mit Wasser, insbesondere in Form von Luftfeuchtigkeit. Die ausgehärtete Zusammensetzung weist insbesondere eine geringere Oberflächenklebrigkeit auf als eine ausgehärtete Zusammensetzung einer vergliechbaren Zusammensetzung, welche anstelle von ungesättigtem natürlichem Öl Weichmacher enthält. Dies ist insbesondere nach längerer UV- und/oder Wärmeexposition der Fall.

Ausserdem verfügt die ausgehärtete Zusammensetzung überraschenderweise über eine deutlich bessere Haftung auf Beton nach Wasserlagerung. Sie verfügt zusätzlich über eine wesentlich höhere Lagerstabilität und eine deutlich kürzere Hautbildungszeit.

Aufgrund dessen ist die vorgängig beschriebene Zusammensetzung bestens als Dichtstoff geeignet.

Möglich ist die Verwendung einer vorhergehend beschriebenen Zusammensetzung als Dichtstoff.

Vorzugsweise sind Zusammensetzungen zur Verwendung als Dichtstoffe möglichst weichelastisch und weisen gleichzeitig ein hohes Rückstellvermögen auf, um Ausdehnungen und Verschiebungen der abgedichteten Substrate möglichst kraftarm und reversibel zu überbrücken. Dichtstoffe verfügen typischerweise über eine Zugfestigkeit zwischen 0.5 bis 2.3 MPa, insbesondere zwischen 0.8 bis 1.8 MPa, und eine Bruchdehnung von über 400%.

Damit unterscheiden sich Dichtstoffe in den erwähnten Eigenschaften von Klebstoffen, welche üblicherweise eine Zugfestigkeit von mehr als 2.3 MPa und eine Bruchdehnung von unter 400% aufweisen.

Wetterhin unterscheiden sich Dichtstoffe von den Klebstoffen im Anteil an feuchtigkeitsreaktiven Gruppen. Feuchtigkeitsreaktive Zusammensetzungen, welche als Dichtstoffe Verwendung finden, weisen typischerweise einen kleineren Anteil an feuchtigkeitsreaktiven Gruppen, bezogen auf das Gesamtgewicht der feuchtigkeitsreaktiven Zusammensetzung, auf.

Eine Verwendung der vorhergehend beschriebenen Zusammensetzung als Dichtstoff erlaubt ein Verfahren der Abdichtung umfassend die Schritte
i') Applikation einer Zusammensetzung gemäss vorhergehender Beschreibung auf ein Substrat S1 und/oder zwischen zwei Substrate S1 und S2;
ii') Aushärtung der Zusammensetzung mittels Wasser, insbesondere in der Form von Luftfeuchtigkeit;
wobei die Substrate S1 und S2 gleich oder verschieden voneinander sind.

Als Substrate S1 und/oder S2 eignen sich insbesondere Substrate, welche ausgewählt sind aus der Gruppe bestehend aus Beton, Mörtel, Backstein, Ziegel, Gips, ein Naturstein wie Granit oder Marmor, Glas, Glaskeramik, Metall oder Metalllegierung, Holz, Kunststoff oder Lack.

Möglich ist die Verwendung von mindestens einem ungesättigten natürlichen Öl zur Verringerung der Oberflächenklebrigkeit von ausgehärteten Polymerzusammensetzungen.

Das ungesättigte natürliche Öl wurde bereits im Detail vorgängig beschrieben. Das ungesättigte natürliche Öl befindet sich vor und/oder während der Aushärtung bereits in der zugrunde liegenden Polymerzusammensetzung. Der Anteil an ungesättigtem natürlichen Öl beträgt typischerweise 0.1 bis 15 Gewichts-%, insbesondere 1 bis 13 Gewichts-%, bevorzugt 3 bis 8 Gewichts-%, besonders bevorzugt 6 bis 8 Gewichts-% der ausgehärteten Polymerzusammensetzung.

Das ungesättigte natürliche Öl weist typischerweise eine Iodzahl von ≥ 100, insbesondere ≥ 140, bevorzugt ≥ 170 auf.

Besonders geeignet ist die Verwendung von ungesättigten natürlichen Ölen in ausgehärteten Polymerzusammensetzungen, welche erhältlich sind aus einer Reaktion einer Zusammensetzung umfassend mindestens ein Polymer P, wie es vorhergehend beschrieben ist, mit Wasser, insbesondere in Form von Luftfeuchtigkeit.

### Beispiele

### Verwendete Rohstoffe

| | |
|---|---|
| Acclaim® 4200N | Bayer MaterialScience AG, Deutschland; low monol Polyoxypropylendiol, mittleres Molekulargewicht ca. 4'000 g/mol, OH-Zahl 28 mg KOH/g, Wassergehalt 0.02% |
| Voranol® CP 4755 | The Dow Chemical Company, USA; Ethylenoxid-terminiertes Polyoxypropylentriol, mittleres Molekular-gewicht ca. 4'700 g/mol, OH-Zahl 35 mg KOH/g, Wassergehalt 0.02% |
| Desmodur® T-80 P | Bayer MaterialScience AG, Deutschland; 2,4- und 2,6-Toluylendiisocyanat im Verhältnis 80:20, NCO-Equivalentgewicht 87 g/Eq |
| Jeffcat® TD-33A | Huntsman International, LLC, USA; 33% 1,4-Diazabicyclo[2.2.2]octan in Dipropylenglykol |
| Jeffamine® D-2000 | Huntsman International, LLC, USA; α,ω-Polyoxy-propylendiamin, Amin-Equivalentgewicht 980 g/Eq |
| Plastomoll® DOA | BASF SE, Deutschland; Bis(2-ethylhexyl)adipat, Wasser-gehalt 0.028% |
| Mesamoll® | Bayer MaterialScience AG, Deutschland; n-Alkan(C10-21)sulfonsäurephenylester, Wassergehalt 0.068% |
| Isophorondiisocyanat | Evonik Degussa GmbH, Deutschland; ***"IPDI"*** |
| 2,6-Di-tert-butyl-4-methylphenol | Sigma-Aldrich Chemie GmbH, Schweiz; ***"BHT"*** |
| 3-Glycidyloxypropyl-trimethoxysilan | Evonik Degussa GmbH, Deutschland |
| Rapsöl | Sigma-Aldrich Chemie GmbH, Schweiz |
| Sojaöl | Sigma-Aldrich Chemie GmbH, Schweiz |

### Herstellung Polyurethanpolymer "P1-1"

Unter Feuchtigkeitsausschluss wurden 1000 g Polyol Acclaim® 4200N, 500 g Voranol® CP 4755, 124.3 g Desmodur® T-80 P und 1.5 g Jeffcat® TD-33A bei 80 °C gerührt, bis der Isocyanatgehalt der Mischung einen konstanten Wert von 1.5 Gewichts-% aufwies. Das erhaltene Polymer wurde auf Raumtemperatur abgekühlt und unter Ausschluss von Feuchtigkeit aufbewahrt. Es hatte eine Viskosität von 20 Pa s bei 20 °C.

### Herstellung Polyaldimin "ALD1"

In einem Rundkolben wurden unter Stickstoffatmosphäre 27.87 g (0.263 mol) Benzaldehyd vorgelegt. Unter kräftigem Rühren wurden aus einem Eintropftrichter langsam 250.00 g (0.255 mol NH₂) Jeffamine® D-2000 zugegeben. Danach wurden bei 80 °C die flüchtigen Bestandteile im Vakuum vollständig abdestilliert. Es wurden 272.3 g gelbliches, bei Raumtemperatur flüssiges Reaktionsprodukt erhalten mit einem Aldimin-Gehalt, bestimmt als Amin-Gehalt, von 0.93 mmol NH₂/g.

### Herstellung der Zusammensetzungen

In einem Vakuum-Mischer wurden die in der Tabelle 1 angegebenen Rohstoffe der Beispiele ***1*** und ***2,*** sowie der Vergleichsbeispiele ***Ref1*** und ***Ref2*** jeweils zu einer homogenen Paste verarbeitet, welche unter Ausschluss von Feuchtigkeit aufbewahrt wurde.

### Beschreibung der Prüfmethoden

Die **Viskosität** wurde auf einem thermostatisierten Kegel-Platten-Viskosimeter Physica UM (Kegeldurchmesser 20 mm, Kegelwinkel 1°, Kegelspitze-Platten-Abstand 0.05 mm, Schergeschwindigkeit 10 bis 1000 s⁻¹) gemessen.
Das **Amin-Equivalentgewicht** der Polyamine und der **Gehalt an Aldiminogruppen** der hergestellten Polyaldimine **("Amin-Gehalt")** wurden titrimetrisch bestimmt (mit 0.1 N HClO₄ in Eisessig, gegen Kristallviolett). Der Gehalt an Aldiminogruppen ist angegeben als Amin-Gehalt in mmol NH₂/g.
Zur Bestimmung der **Hautbildungszeit** wurde ein kleiner Teil der während 2 Stunden bei 40°C gelagerten, raumtemperaturwarmen Zusammensetzung in einer Schichtdicke von ca. 2 mm auf Pappkarton aufgetragen und bei Normklima (23±1 °C, 50±5% relative Luftfeuchtigkeit) die Zeit bestimmt, die es dauerte, bis beim leichten Antippen der Oberfläche der Zusammensetzung mittels einer Pipette aus LDPE erstmals keine Rückstände auf der Pipette mehr zurückblieben.
Die **Shore A** - Härte bei wurde bestimmt nach DIN 53505.
Die **Zugfestigkeit** und die **Bruchdehnung** wurden bestimmt nach DIN 53504 (Zuggeschwindigkeit: 200 mm/min) an während 14 Tagen im Normklima ausgehärteten Filmen mit einer Schichtdicke von 2 mm.

Zur Bestimmung der **Durchhärtungsgeschwindigkeit** wurde die Zusammensetzung in die Aussparung einer Teflonform mit keilförmiger Aussparung appliziert und mittels Holzspatel abgestrichen. Nach 24 Stunden bei Normklima wurde vom dünnen Ende des Keiles her die nun vernetzte Zusammensetzung von der Teflonform sorgfältig abgehoben, bis zu der Stelle (d.h. Dicke), an welcher auf der geneigten Keilaussparungsfläche unausgehärtete Zusammensetzung gefunden wird. Aufgrund der Abmessungen kann so die Aushärtungsschichtdicke als Mass für die Durchhärtungsgeschwindigkeit ermittelt werden.
Zur Bestimmung der **Oberflächenklebrigkeit** wurden drei verschiedene Messungen durchgeführt. Im Fall "OFK" wurde die Zusammensetzung unmittelbar nach der Herstellung in einem 26*17*200 mm Aluminium-U-Kanal aufgebracht und anschliessend während 2 Tagen bei Normklima gelagert. Im Fall von "OFK_{UV}" wurde die Zusammensetzung im Aluminium-U-Kanal für 1 Tag bei 60°C in einem XLS Xenon-Prüfgerät der Suntester-Familie der Firma Atlas Material Testing Technology GmbH, Deutschland, UV-Strahlung ausgesetzt und anschliessend während 1 Tag bei Normklima gelagert. Im Fall von "OFK_{7d,60°/UV}" wurde die Zusammensetzung unmittelbar nach der Herstellung in eine feuchtigkeitsdichte Aluminiumkartusche abgefüllt und verschlossen für 7 Tage bei 60 °C gelagert. Danach wurde die Zusammensetzung im Aluminium-U-Kanal aufgebracht, für 1 Tag bei 60 °C im XLS Xenon-Prüfgerät UV-Strahlung ausgesetzt und anschliessend während 1 Tag bei Normklima gelagert. Die jeweiligen Proben wurden mit dem Daumen berührt und die Oberflächenklebrigkeit mit "klebrig" beziehungsweise "trocken" beurteilt.
Zur Bestimmung der **Haftung** wurde die Zusammensetzungen als Rundraupe mit einer Kartuschenpresse und einer Düse auf einen Betonprüfkörper von Rocholl, Deutschland, aufgetragen. Anschliessend wurde die Zusammensetzungen während 7 Tagen bei Normklima (Raumtemperatur-Klimalagerung: "KL") ausgehärtet und die Hälfte der Raupe mittels unten beschriebenen Haftungstest getestet. Danach wurde die Probe während weiteren 7 Tagen ins Wasser bei 23 °C gelegt (Wasserlagerung: "WL"). Anschliessend wurde die Haftung durch den Raupentest für die verbleibende Hälfte der Raupe getestet.

Die Haftung der Zusammensetzungen wurde mittels 'Raupentest' getestet. Hierbei wird am Ende der Raupe knapp über der Klebefläche eingeschnitten. Das eingeschnittene Ende der Raupe wird mit einer Rundzange festgehalten und vom Untergrund gezogen. Dies geschieht durch vorsichtiges Aufrollen der Raupe auf die Zangenspitze, sowie durch Plazieren eines Schnittes bis auf den blanken Untergrund senkrecht zur Raupenziehrichtung. Die Raupenabziehgeschwindigkeit ist so zu wählen, dass ca. alle 3 Sekunden ein Schnitt gemacht werden muss. Die Teststrecke muss mindestens 8 cm entsprechen. Beurteilt wird die nach dem Abziehen der Raupe auf dem Untergrund zurückbleibende Zusammensetzung (Kohäsionsbruch). Die Bewertung der Hafteigenschaften erfolgt durch Abschätzen des kohäsiven Anteils der Haftfläche:
1 = > 95% Kohäsionsbruch
2 = 75 - 95% Kohäsionsbruch
3 = 25 - 75% Kohäsionsbruch
4 = < 25% Kohäsionsbruch
5 = 0% Kohäsionsbruch (rein adhäsiver Bruch)

Testresultate mit Kohäsionsbruchwerten von weniger als 75% gelten als ungenügend.
Zur Bestimmung der **Lagerstabilität** wurde von der unmittelbar hergestellten Zusammensetzung ein Teil direkt für die Messung der Viskosität (Ausgangsviskosität) verwendet, der Rest wurde in eine feuchtigkeitsdichte Aluminiumkartusche abgefüllt, bei 60°C gelagert und davon periodisch die Viskosität bestimmt. Tabelle 1 gibt die Lagerzeit bei 60 °C an, nach welcher die gemessene Viskosität zum ersten Mal das Doppelte der Ausgangsviskosität überschreitet. Dieser Wert stellt ein Mass für die Lagerstabilität dar. Die Viskosität wurde jeweils bei 23°C bestimmt. Je grösser dieser Wert, desto lagerstabiler ist die Zusammensetzung.
Der **NCO-Gehalt** wurde bestimmt nach DIN 53185.
Die Resultate der Beispiele ***1*** und ***2,*** sowie der Vergleichsbeispiele ***Ref1*** und ***Ref2*** sind in Tabelle 1 aufgeführt. Aufgrund der Resultate von Tabelle 1 sind Beispiele ***1*** und ***2*** bestens als Dichtstoffe geeignet.

**Tabelle 1: Zusammensetzung und Prüfergebnisse der Dichtstoffe der Beispiele. Die Mengenangaben sind in Gewichts-%. ¹ 5.0 Gewichts-% in Dioctyladipat.**

| | ***Ref1*** | | ***Ref2*** | | ***1*** | | ***2*** | |
|---|---|---|---|---|---|---|---|---|
| Pyrogene Kieselsäure | 6.64 | | 6.64 | | 6.64 | | 6.64 | |
| Kreide | 44.46 | | 44.46 | | 44.46 | | 44.46 | |
| Titandioxid | 4.0 | | 4.0 | | 4.0 | | 4.0 | |
| ***BHT*** (Stabilisator) | 0.2 | | 0.2 | | 0.2 | | 0.2 | |
| Salicylsäure¹ | 1.0 | | 1.0 | | 1.0 | | 1.0 | |
| ***P1-1*** | 20.6 | | 20.6 | | 20.6 | | 20.6 | |
| Zinnkatalysator | 2.0 | | 2.0 | | 2.0 | | 2.0 | |
| ***IPDI*** | 0.4 | | 0.4 | | 0.4 | | 0.4 | |
| ***ALD1*** | 7.9 | | 7.9 | | 7.9 | | 7.9 | |
| 3-Glycidyloxypropyltrimethoxysilan | 0.2 | | 0.2 | | 0.2 | | 0.2 | |
| Plastomoll® DOA | 12.6 | | - | | - | | - | |
| Mesamoll® | - | | 12.6 | | - | | - | |
| Rapsöl | - | | - | | 12.6 | | - | |
| Sojaöl | - | | - | | - | | 12.6 | |
| NCO-Gehalt [Gewichts-%] | 0.46 | | 0.46 | | 0.44 | | 0.47 | |
| Hautbildungszeit [min] | 45 | | 45 | | 20 | | 20 | |
| OFK | trocken | | trocken | | trocken | | trocken | |
| OFK_{UV} | klebrig | | klebrig | | trocken | | trocken | |
| OFK_{7d,60°/UV} | klebrig | | klebrig | | trocken | | trocken | |
| Lagerstabilität [d] | 7 | | 7 | | 14 | | 14 | |
| Shore A | 34 | | 37 | | 29 | | 27 | |
| Durchhärtungsgeschwindigkeit RT [mm/d] | 2.8 | | 2.7 | | 3 | | 2.7 | |
| Zugfestigkeit [MPa] | 2 | | 1.9 | | 1.5 | | 1.4 | |
| Bruchdehnung [%] | 1015 | | 955 | | 862 | | 835 | |
| Haftung auf Beton nach unter-schiedlicher Lagerung | KL | WL | KL | WL | KL | WL | KL | WL |
| | 1 | 5 | 1 | 5 | 1 | 3 | 1 | 2 |

### Diskussion der Resultate

Die Vergleichsbeispiele ***Ref1,*** beziehungsweise ***Ref2***, enthalten die Weichmacher Plastomoll® DOA, beziehungsweise Mesamoll®, während die Beispiele *1,* beziehungsweise 2, Rapsöl, beziehungsweise Sojaöl, enthalten.
Aus Tabelle 1 ist ersichtlich, dass die Beispiele ***1*** und ***2,*** gegenüber den Vergleichsbeispielen ***Ref1*** und ***Ref2,*** nach UV- und/oder Wärmeexposition eine deutlich geringere Oberflächenklebrigkeit aufweisen. Zusätzlich zeichnen sich die Beispiele ***1*** und 2 gegenüber den Vergleichsbeispielen ***Ref1*** und ***Ref2*** dadurch aus, dass sie eine deutlich kürzere Hautbildungszeit aufweisen und dass sie über eine deutlich bessere Haftung auf Beton nach Wasserlagerung verfügen. Sie verfügen ausserdem über eine wesentlich höhere Lagerstabilität.

## Patentansprüche

1. Zusammensetzung umfassend
a) mindestens ein Polymer P mit feuchtigkeitsreaktiven Gruppen, wobei das Polymer P
i) ein Polyurethanpolymer P1 ist und die feuchtigkeitsreaktiven Gruppen Isocyanatgruppen sind und der Gehalt an Isocyanatgruppen 0.1 bis 1 Gewichts-%, bezogen auf das Gesamtgewicht der Zusammensetzung, beträgt;
oder
ii) ein Polymer P2 ist und die feuchtigkeitsreaktiven Gruppen Silangruppen sind und der Gehalt an Silangruppen 0.1 bis 2 Gewichts-%, bezogen auf das Gesamtgewicht der Zusammensetzung, beträgt;
oder
iii) ein Polymer P3 ist, welches als feuchtigkeitsreaktive Gruppen Isocyanatgruppen und Silangruppen aufweist und die Summe des Gehalts an Isocyanatgruppen und Silangruppen 0.1 bis 2 Gewichts-%, bezogen auf das Gesamtgewicht der Zusammensetzung, beträgt; wobei der Gehalt der Isocyanatgruppen ≤ 1 Gewichts-%, bezogen auf das Gesamtgewicht der Zusammensetzung, beträgt;
mit der Massgabe, dass der Gesamtgehalt der feuchtigkeitsreaktiven Gruppen ≤ 2 Gewichts-%, bezogen auf das Gesamtgewicht der Zusammensetzung, beträgt, wobei der Gesamtgehalt aller Isocyanatgruppen ≤ 1 Gewichts-% bezogen auf das Gesamtgewicht der Zusammensetzung, beträgt; sowie
b) mindestens ein ungesättigtes natürliches Öl, wobei unter ungesättigte natürliche öle bei 23°C flüssige Ester von Tettsäuren mit Glyceriden verstanden wirden, wobei mindestens eine Fettsäure ungesättigt ist.

2. Zusammensetzung gemäss Anspruch 1, **dadurch gekennzeichnet, dass** der Anteil an ungesättigtem natürlichen Öl 0.1 bis 15 Gewichts-%, insbesondere 1 bis 13 Gewichts-%, bevorzugt 3 bis 8 Gewichts-%, besonders bevorzugt 6 bis 8 Gewichts-%, bezogen auf das Gesamtgewicht der Zusammensetzung, beträgt.

3. Zusammensetzung gemäss einem der vorangehenden Ansprüche, **dadurch gekennzeichnet, dass** das ungesättigte natürliche Öl eine Iodzahl von ≥ 100, insbesondere ≥ 140, bevorzugt ≥ 170 aufweist.

4. Zusammensetzung gemäss einem der vorangehenden Ansprüche, **dadurch gekennzeichnet, dass** das ungesättigte natürliche Öl ausgewählt ist aus der Gruppe bestehend aus Rizinusöl, Leinöl, Hanföl, Chiaöl, Sojaöl, Rapsöl, Maiskeimöl, Sonnenblumenöl, Mohnöl, Walnussöl, Rübsaatöl, Baumwollsaatöl, Perillaöl, Oiticicaöl, Safloröl, Holzöl, Fischöl, Erdnussöl, Sesamöl, Mandelöl und Olivenöl.

5. Zusammensetzung gemäss einem der vorangehenden Ansprüche, **dadurch gekennzeichnet, dass** im Polyurethanpolymer **P1** der Gehalt an Isocyanatgruppen 0.1 bis 0.8 Gewichts-%, insbesondere 0.3 bis 0.8 Gewichts-%, bezogen auf das Gesamtgewicht der Zusammensetzung, beträgt.

6. Zusammensetzung gemäss einem der vorangehenden Ansprüche, **dadurch gekennzeichnet, dass** im Polymer **P2** der Gehalt an Silangruppen 0.1 bis 1.6 Gewichts-%, insbesondere 0.6 bis 1.6 Gewichts-%, bezogen auf das Gesamtgewicht der Zusammensetzung, beträgt.

7. Zusammensetzung gemäss einem der vorangehenden Ansprüche, **dadurch gekennzeichnet, dass** im Polymer **P3** die Summe des Gehalts an Isocyanatgruppen und Silangruppen 0.1 bis 1.6 Gewichts-%, insbesondere 0.3 bis 1.6 Gewichts-%, bezogen auf das Gesamtgewicht der Zusammensetzung, beträgt;
wobei der Gehalt der Isocyanatgruppen ≤ 1 Gewichts-%, bezogen auf das Gesamtgewicht der Zusammensetzung, beträgt.

8. Zusammensetzung gemäss einem der vorangehenden Ansprüche, **dadurch gekennzeichnet, dass** die Zusammensetzung zusätzlich mindestens einen Füllstoff umfasst, wobei der Anteil an Füllstoff 20 bis 60 Gewichts-%, insbesondere 30 bis 60 Gewichts-%, bezogen auf das Gesamtgewicht der Zusammensetzung, beträgt.

9. Ausgehärtete Zusammensetzung erhalten durch die Reaktion einer Zusammensetzung gemäss einem der Ansprüche 1 bis 8 mit Wasser, insbesondere in Form von Luftfeuchtigkeit.

## Claims

1. Composition comprising
a) at least one polymer P comprising moisture-reactive groups, wherein the polymer P
i) is a polyurethane polymer P1, the moisture-reactive groups are isocyanate groups and the isocyanate group content is 0.1 to 1 % by weight, based on the total weight of the composition;
or
ii) is a polymer P2, the moisture-reactive groups are silane groups and the silane group content is 0.1 to 2 % by weight, based on the total weight of the composition;
or
iii) is a polymer P3 which has isocyanate groups and silane groups as moisture-reactive groups, and the sum of the isocyanate group and silane group contents is 0.1 to 2 % by weight, based on the total weight of the composition;
wherein the isocyanate group content is ≤ 1 % by weight, based on the total weight of the composition;
provided that the total moisture-reactive group content is ≤ 2 % by weight, based on the total weight of the composition, wherein the total content of all isocyanate groups is ≤ 1 % by weight, based on the total weight of the composition; and
b) at least one unsaturated natural oil, wherein esters of fatty acids with glycerides, which esters are liquid at 23 °C, are meant by unsaturated natural oils, wherein at least one fatty acid is unsaturated.

2. Composition according to claim 1, **characterised in that** the unsaturated natural oil content is 0.1 to 15 % by weight, in particular 1 to 13 % by weight, preferably 3 to 8 % by weight, particularly preferably 6 to 8 % by weight, based on the total weight of the composition.

3. Composition according to any of the preceding claims, **characterised in that** the unsaturated natural oil has an iodine number of ≥ 100, in particular ≥ 140, preferably ≥ 170.

4. Composition according to any of the preceding claims, **characterised in that** the unsaturated natural oil is selected from the group consisting of castor oil, linseed oil, hemp oil, chia oil, soya oil, rapeseed oil, maize germ oil, sunflower oil, poppy seed oil, walnut oil, turnip oil, cottonseed oil, perilla oil, oiticica oil, safflower oil, wood oil, fish oil, groundnut oil, sesame oil, almond oil and olive oil.

5. Composition according to any of the preceding claims, **characterised in that** the isocyanate group content in the polyurethane polymer P1 is 0.1 to 0.8 % by weight, in particular 0.3 to 0.8 % by weight, based on the total weight of the composition.

6. Composition according to any of the preceding claims, **characterised in that** the silane group content in the polymer P2 is 0.1 to 1.6 % by weight, in particular 0.6 to 1.6 % by weight, based on the total weight of the composition.

7. Composition according to any of the preceding claims, **characterised in that** the sum of the isocyanate group and silane group contents in the polymer P3 is 0.1 to 1.6 % by weight, in particular 0.3 to 1.6 % by weight, based on the total weight of the composition, the isocyanate group content being ≤ 1 % by weight, based on the total weight of the composition.

8. Composition according to any of the preceding claims, **characterised in that** the composition additionally comprises at least one filler, the filler content being 20 to 60 % by weight, in particular 30 to 60 % by weight, based on the total weight of the composition.

9. Hardened composition obtained by reacting a composition according to any of claims 1 to 8 with water, in particular in the form of air moisture.

## Revendications

1. Composition comprenant :
a) au moins un polymère P avec des groupes réagissant à l'humidité, dans laquelle le polymère P :
i) est un polymère de polyuréthane P1 et les groupements réagissant à l'humidité sont des groupements isocyanate et la teneur en groupements isocyanate est de 0,1 à 1 % en poids par rapport au poids total de la composition ;
ou
ii) est un polymère P2 et les groupements réagissant à l'humidité sont des groupements silane et la teneur en groupements silane est de 0,1 à 2 % en poids par rapport au poids total de la composition ;
ou
iii) est un polymère P3, qui présente comme groupements réagissant à l'humidité des groupements isocyanate et des groupements silane et la somme de la teneur en groupements isocyanate et de la teneur en groupements silane est de 0,1 à 2 % en poids par rapport au poids total de la composition ;
dans laquelle la teneur en groupements isocyanate est ≤ à 1 % en poids par rapport au poids total de la composition ;
à condition que la teneur totale en groupements réagissant à l'humidité soit ≤ à 2 % en poids par rapport au poids total de la composition, la teneur totale de tous les groupements isocyanate étant ≤ à 1 % en poids par rapport au poids total de la composition ; ainsi que
b) au moins une huile naturelle insaturée, dans laquelle on entend par huiles naturelles insaturées des esters liquides à 23 °C d'acides gras avec des glycérides, au moins un acide gras étant insaturé.

2. Composition selon la revendication 1, **caractérisée en ce que** la fraction d'huile naturelle insaturée est de 0,1 à 15 % en poids, en particulier de 1 à 13 % en poids, mieux encore de 3 à 8 % en poids, bien mieux encore de 6 à 8 % en poids, par rapport au poids total de la composition.

3. Composition selon l'une quelconque des revendications précédentes, **caractérisée en ce que** l'huile naturelle insaturée présente un indice d'iode ≥ à 100, en particulier ≥ à 140, mieux encore ≥ à 170.

4. Composition selon l'une quelconque des revendications précédentes, **caractérisée en ce que** l'huile naturelle insaturée est choisie dans le groupe constitué de l'huile de ricin, l'huile de lin, l'huile de chanvre, l'huile de chia, l'huile de soja, l'huile de colza, l'huile de germes de maïs, l'huile de tournesol, l'huile d'oeillette, l'huile de noix, l'huile de navette, l'huile de germes de coton, l'huile de périlla, l'huile d'oïticica, l'huile de carthame, l'huile de bois, l'huile de poissons, l'huile d'arachide, l'huile de sésame, l'huile d'amandes et l'huile d'olives.

5. Composition selon l'une quelconque des revendications précédentes, **caractérisée en ce que**, dans le polymère de polyuréthane P1, la teneur en groupements isocyanate est de 0,1 à 0,8 % en poids, en particulier de 0,3 à 0,8 % en poids, par rapport au poids total de la composition.

6. Composition selon l'une quelconque des revendications précédentes, **caractérisée en ce que**, dans le polymère P2, la teneur en groupements silane est de 0,1 à 1,6 % en poids, en particulier de 0,6 à 1,6 % en poids, par rapport au poids total de la composition.

7. Composition selon l'une quelconque des revendications précédentes, **caractérisée en ce que**, dans le polymère P3, la somme de la teneur en groupements isocyanate et en groupements silane est de 0,1 à 1,6 % en poids, en particulier de 0,3 à 1,6 % en poids, par rapport au poids total de la composition ;
dans laquelle la teneur en groupements isocyanate est ≤ à 1 % en poids par rapport au poids total de la composition.

8. Composition selon l'une quelconque des revendications précédentes, **caractérisée en ce que** la composition comprend en plus au moins une charge, dans laquelle la fraction de charge étant de 20 à 60 % en poids, en particulier de 30 à 60 % en poids, par rapport au poids total de la composition.

9. Composition durcie obtenue par réaction d'une composition selon l'une quelconque des revendications 1 à 8 avec de l'eau, en particulier sous la forme d'humidité de l'air.
